# EUROPEAN PATENT SPECIFICATION

(11) **EP 4 358 738 B1**
(45) Date of publication and mention of the grant of the patent: **04.06.2025**
(21) Application number: 22734626.9
(22) Date of filing: 23.06.2022
(51) Int. Cl.: A23L 2/56, A23L 11/65, A23C 11/10, A23L 2/66, A23G 1/56

(54) **CHOCOLATE BEVERAGE COMPRISING PLANT PROTEIN AND PREPARATION PROCESS**
SCHOKOLADENGETRÄNK MIT PFLANZENPROTEIN UND HERSTELLUNGSVERFAHREN
BOISSON À BASE DE CHOCOLAT COMPRENANT DES PROTÉINES VÉGÉTALES ET PROCÉDÉ DE PRÉPARATION

(30) Priority: 24.06.2021 EP 21181452; 22.04.2022 EP 22169480
(43) Date of publication of application: 01.05.2024
(73) Proprietor: FrieslandCampina Nederland B.V., 3818 LE Amersfoort (NL)
(72) Inventor: TERSAGO, Rudiger Maria Clement, 6708 WH Wageningen (NL); VANHALEWYN, Isabel Marc Christianne, 6708 WH Wageningen (NL); VAN DE VEN, Martinus Johannes Maria, 6708 WH Wageningen (NL)
(74) Representative: FrieslandCampina IP Department
(86) International application number: PCT/EP2022/067234
(87) International publication number: WO 2022/268982

(56) References cited:
- WO-A1-2014/186896
- US-A- 6 153 247
- DATABASE GNPD [online] MINTEL; 23 September 2014 (2014-09-23), ANONYMOUS: "Chocolate Flavoured Maha Millet Mix", XP055863804, retrieved from https://www.gnpd.com/sinatra/recordpage/2678465/ Database accession no. 2678465
- ANONYMOUS: "Silk Chocolate Protein", 23 September 2020 (2020-09-23), XP055863806, Retrieved from the Internet <URL:https://web.archive.org/web/20200923003620/https://silk.com/plant-based-products/plant-based-protein-beverages/chocolate-protein/> [retrieved on 20211121]
- DATABASE GNPD [online] MINTEL; 23 September 2014 (2014-09-23), ANONYMOUS: "Chocolate Flavoured Maha Millet Mix", XP055863804, retrieved from https://www.gnpd.com/sinatra/recordpage/2678465/ Database accession no. 2678465

## Description

### Field of the invention

The invention relates to a process to prepare a chocolate beverage comprising plant proteins and to a beverage comprising plant protein.

### Background to the invention

Plant-based beverages that can be used as milk alternatives are well-known and their consumption is increasing as nowadays plant-based milk alternatives are not only of interest for people having a vegan lifestyle. Also non-vegan consumers increasingly choose plant-based milk alternatives for variation. Typical examples are soy, oats, rice, coconut, and almonds based milk alternatives. These milk alternatives are often sold with a plain taste, but also sometimes as drinks flavoured with, for example, chocolate. A drawback of known plant-based chocolate drinks is that they do not match the creamy taste and mouthfeel of the chocolate beverages based on dairy. The plant-based chocolate beverages are often perceived as having a watery taste and/or an off-taste.

WO 2014/186896 A1 discloses a process for preparing a beverage comprising nut and dairy products.

A "Chocolate Silk Protein" product is disclosed here: https://web.archive.org/web/20200923003620/https://silk.com/plant-based-products/plant-based-protein-beverages/chocolate-protein/. Said product is described to comprise almond milk, cashewmilk, cane sugar, pea protein, high oleic sunflower oil, cocoa (processed with alkali), calcium carbonate, sea salt, sunflower lecithin, gellan gum, ascorbic acid (to protect freshness), salt, natural flavor, vitamin E acetate, and vitamin D2. This product is perceived as having a too watery taste.

A Chocolate Flavoured Maha Millet Mix is disclosed here: http://www.gnpd.com (Mintel). The mix comprises foxtail millet, kodo millet, little millet, finger millet, pearl millet, bengal gram, cowpea, flax seeds, almonds, cashew, cocoa powder, and cardamom. It is a vegetarian product that can be consumed hot or cold. It does, however, not have the look and taste of a regular chocolate drink.

There is therefore a need for a good quality plant-based, or even vegan, alternative for dairy based chocolate beverages, having a pleasant, creamy mouthfeel and taste.

The objective underlying the present invention is to provide such a plant-based or even vegan chocolate beverage having good taste and creamy mouthfeel.

### Summary of the invention

It was found that the aforesaid objective could be met by a chocolate beverage comprising the following components:
i. a total amount of plant-based protein of between 0.25 - 6 wt%, with at least 0.25 wt%, and preferably at least 0.5 wt%, being protein from cashew nuts;
ii. a total amount of vegetable fat of between 0.3 - 5 wt%;
iii. cocoa powder, preferably in an amount of 0.2 - 2 wt%;
iv. 0.05 - 14 wt%, preferably 0.1 - 8 wt%, of the one or more sweeteners;
v. 0.03 - 2 wt% of the one or more thickening agents;
vi. 0-2 wt% of the one or more additives selected from the group consisting of flavouring agents, salts, and emulsifiers;
vii. 0.01 - 1 wt% of the acidity regulators selected from the group of citrates, phosphates, carbonates, sulphates, and bicarbonates of sodium, and potassium; and
viii. 75 - 95 wt% of water, wherein the amounts are all based on the total weight of the chocolate beverage.

Said chocolate beverage comprising plant proteins is made according to a process comprising the following steps:
a) blending the following components to form a mixture:
   (i) a source of proteins derived from cashew nuts and optionally one or more sources of other plant proteins in amounts such that the mixture comprises at least 0.25 wt% of protein from cashew nuts and the total amount of plant protein in the mixture lies between 0.25 wt% and 6 wt%;
   (ii) between 0 and 2 wt% of one or more additives selected from the group consisting of flavouring agents, salts, and emulsifiers;
   (iii) between 0.01 and 1 wt% of one or more acidity regulators selected from the group of citrates, phosphates, carbonates, sulphates, and bicarbonates of sodium, and potassium;
   (iv) between 0.03 and 2 wt% of one or more thickening agents;
   (v) vegetable fat in such an amount that the total amount of vegetable fat lies between 0.3 and 5 wt%;
   (vi) between 0.2 and 2 wt% of cocoa powder;
   (vii) between 0.05 and 14 wt% of one or more sweeteners; and
   (viii) between 75 and 95 wt% of water, with weight percentages being based on the total weight of the mixture prepared in step (a);
b) if necessary, adjusting the pH to a pH of 6.9 - 7.4, and subsequently carrying out step (c) which either comprises the steps of
(c-i) subjecting the resulting mixture to a heat treatment by heating it to a temperature of between 65 and 85°C, preferably between 68 and 80°C,
(c-ii) subsequently subjecting the mixture to homogenization step, and
(c-iii) heating the homogenized mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes;
   or
which comprises the steps of
(c-iv) subjecting the mixture to a heat treatment by heating the mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes;
(c-v) cooling to a temperature of between 65 and 85°C, preferably between 68 and 80°C, and
(c-vi) subjecting the mixture to a homogenization step,
d) subjecting the heat-treated and homogenized product to a cooling step, resulting in the chocolate beverage comprising plant proteins.

### Detailed description of the invention

The present invention is defined by the claims. In a first aspect, the invention relates to a chocolate beverage comprising plant proteins. More particularly, said chocolate beverage comprising plant proteins comprises
i. a total amount of plant-based protein of between 0.25 - 6 wt%, with at least 0.25 wt%, and preferably at least 0.5 wt%, being protein from cashew nuts;
ii. a total amount of vegetable fat of between 0.3 - 5 wt%;
iii. cocoa powder, preferably in an amount of 0.2 - 2 wt%;
iv. 0.05 - 14 wt%, preferably 0.1 - 8 wt%, of the one or more sweeteners;
v. 0.03 - 2 wt% of the one or more thickening agents;
vi. 0-2 wt% of the one or more additives selected from the group consisting of flavouring agents, salts, and emulsifiers;
vii. 0.01 - 1 wt% of the acidity regulators selected from the group of citrates, phosphates, carbonates, sulphates, and bicarbonates of sodium, and potassium; and
viii. 75 - 95 wt% of water, wherein the amounts are all based on the total weight of the chocolate beverage.

The inventors have found that, surprisingly, the creamy texture of such a plant-based chocolate beverage is comparable to or even resembles its dairy analog. Especially attractive results are obtained when the cashew nuts protein is used in combination with one or more other types of plant protein. In that case, the other plant protein is preferably selected from the group consisting of chickpea protein, pea protein, edible bean protein, almond protein, soy protein, oat protein, rice protein, lupine protein, lentil protein, macademia protein, pecan nut protein, brazilian nut protein, hazelnut protein, walnut protein, and potato protein. The other plant protein is most preferably selected from the group consisting of chickpea protein, pea protein, and edible bean protein. Less preferred is the combination of cashew nuts protein and almond protein.

The chocolate beverage according to the present invention comprises a source of cashew nuts protein. The cashew nut (*Anacardium occidentale*) produces nuts, the kernels of which are a highly nutritious and comprise up to 25% of protein. The source of cashew nuts protein that is typically used in the beverage according to the invention are powdered cashew kernels, which have optionally been (partially) defatted. Although less preferred, cashew paste can also be used as the source of cashew nut protein. Most preferred source of cashew nuts protein is partially or completely defatted cashew nut powder. More particularly, the source of cashew nuts protein preferably is cashew nut powder comprising at most 25 wt%, more preferably at most 20 wt% of fat, based on the total weight of said source of cashew nuts protein. The use of the source of cashew nuts protein according to the invention has a beneficial effect on taste and mouthfeel. The source of cashew nuts protein can be roasted or non-roasted. The use of a non-roasted cashew nuts protein source is however preferred.

In one embodiment, the source of cashew nuts protein is cashew defatted protein powder, made from 100% cashew nuts, kernel diced, defatted, and ground to a fine powder, such as obtainable from Olam Nuts.

The source of cashew nuts protein is present in the chocolate beverage in such an amount that the cashew nuts protein forms at least 0.25 wt% of the total weight of the beverage. More preferably, the cashew nuts protein is present in the chocolate beverage in an amount of at least 0.3 wt%, and most preferably at least 0.5 wt%, based on the total weight of the beverage. The total amount of cashew nuts protein in the chocolate beverage is preferably at most 6 wt%, based on the total weight of the beverage. More preferably, it is at most 3.0 wt%, and most preferably, at most 1.5 wt%, based on the total weight of the beverage.

In one embodiment according to the invention, the cashew nuts protein is used in combination with one or more other plant proteins, as this has a beneficial effect on taste and consistency of the beverage. The one or more other plant proteins are preferably selected from the group consisting of chickpea protein, pea protein, edible bean protein, almond protein, soy protein, oat protein, rice protein, lupine protein, lentil protein, macademia protein, pecan nut protein, brazilian nut protein, hazelnut protein, walnut protein, and potato protein. More preferably, the cashew nuts protein is used in combination with one or more other plant-based proteins selected from the group consisting of chickpea protein, pea protein, and edible bean protein.

It is noted that sources of the plant-based proteins are present in the chocolate beverage in such an amount that the total amount of plant-based protein in the chocolate beverage is preferably at least 0.25 wt%, based on the total weight of the beverage. More preferably, it is at least 0.3 wt%, and most preferably at least 0.5 wt%, based on the total weight of the beverage. The total amount of plant-based protein in the chocolate beverage is preferably at most 6 wt%, based on the total weight of the beverage. More preferably, it is at most 4 wt%, and more preferably, at most 3.5 wt%, and most preferably, at most 2.5 wt%, based on the total weight of the beverage.

For the sake of clarity, it is noted that the phrase "a total amount of plant-based protein of between 0.25 - 6 wt%, preferably between 0.25 - 4 wt%, more preferably between 0.3 and 3.5 wt%, and most preferably between 0.3 - 2.5 wt%, with at least 0.25 wt% and preferably at least 0.5 wt%, being protein from cashew nuts" as used hereinbelow, thus means that the chocolate beverage of the invention always comprises at least 0.25 wt%, based on the total weight of said beverage, of protein from cashew nuts.

Suitable pea proteins that can be used are proteins isolated from all kinds of peas. Commercially available pea protein isolates have typically been purified. It is also possible to use pea protein hydrolysates or denatured pea proteins. Therefore, the term "pea protein" as used throughout the specification is meant to denote all types of pea protein that are known to be suitable for use in a beverage for human consumption.

Suitable edible bean proteins that can be used in accordance with the invention are proteins isolated from all kinds of beans which are known to be suitable for human consumption such as mungbean, faba bean. Particularly preferred are proteins from faba beans (also sometimes denoted as fava bean or broad bean). The term "edible bean protein" as used throughout the specification is thus meant to denote all types of edible bean proteins that are known to be suitable for use in a beverage for human consumption.

Analogously, suitable chickpea proteins that can be used are proteins isolated from chickpeas, which have optionally been purified, hydrolyzed or denatured. The term "chickpea protein" as used throughout the specification is thus meant to denote all types of chickpea protein that are known to be suitable for use in a beverage for human consumption.

As the skilled person will understand, the other plant proteins that can be used in the chocolate beverage according to the invention are defined in a similar manner.

The chocolate beverage according to the invention preferably comprises substantially no dairy proteins, meaning that it comprises less than 0.1 wt%, more preferably less than 0.05 wt%, even more preferably less than 0.01 wt% of dairy proteins. Most preferably, the chocolate beverage comprises no dairy proteins at all.

Cocoa powder is also present in the beverage according to the present invention. The presence of the cocoa powder adds to the creamy mouthfeel of the beverage, the chocolate flavor, and the dark colour. Cocoa powder is the low fat powder that remains after removal of (part of the) cocoa butter from the cocoa liquor. The fat in cocoa powder is cocoa butter. Cocoa powder can comprise up to 22% by weight of cocoa butter. Full-fat cocoa powder typically comprises between 20 and 22% by weight of cocoa butter. Skimmed cocoa powder typically still comprises around 10-12% by weight of cocoa butter. However, also fat-free cocoa powder can be used. For the sake of clarity, the amount of cocoa powder in the beverage according to the invention is therefore calculated on the basis of fat-free, dry matter. Accordingly, the amounts of cocoa powder mentioned throughout the specification are the amounts as calculated on the basis of fat-free, dry matter. The cocoa powder is present in an amount of at least 0.2 wt%, more preferably at least 0.3 wt% and most preferably at least 0.35 wt%, calculated as fat-free, dry matter and based on the total weight of the chocolate bverage and at most 2 wt%, more preferably at most 1.7 wt% and most preferably at most 1.4 wt%, calculated as fat-free, dry matter and based on the total weight of the chocolate beverage.

In the chocolate beverage according to the invention, a vegetable fat is present, in a total amount of at least 0.3 wt%, preferably at least 0.4 wt% and more preferably at least 0.5 wt%, based on the total weight of the chocolate beverage. The presence of the vegetable fat adds to the creamy mouthfeel of the beverage.

The vegetable fat is present in a total amount of at most 5 wt%, more preferably at most 4 wt% and most preferably at most 3 wt%, based on the total weight of the chocolate beverage.

The vegetable fat according to the present invention can be a mixture of different types of vegetable fat. Part of, or even all, of the vegetable fat present in the chocolate beverage may originate from the used source or sources of plant protein, such as cashew nuts kernels, cashew nuts paste, and/or other plant protein sources of the invention. Furthermore, some of the vegetable fat present in the chocolate beverage may originate from the cocoa powder.

Part of, or all, the vegetable fat present in the beverage according to the invention may originate from the source of cashew nut protein.

The vegetable fat preferably comprises cocoa butter. However, also other types of vegetable fat can be used such as coconut oil, palm kernel fat, palm oil, peanut oil, corn oil, canola oil, sunflower oil, grapeseed oil, olive oil, sesame oil, rice bran oil, linseed oil, safflower oil, almond oil, pecan oil, and rapeseed oil. As mentioned, it is also possible to use a combination of these fats.

In the chocolate beverage one or more sweeteners are present. As the skilled person knows, the amount of sweeteners used will depend on the type(s) of sweetener(s) used. However, the total amount of sweeteners is at least 0.05 wt%, more preferably at least 0.1 wt% and most preferably at least 0.25 wt%, based on the total weight of the chocolate beverage. The total amount of sweeteners forms typically no more than 14 wt%, more preferably no more than 8 wt%, and most preferably no more than 6 wt% of the chocolate beverage, based on the total weight of the chocolate beverage. In one embodiment, the one or more sweeteners are selected from the group consisting of sweet taste improving carbohydrates such as sucrose, fructose, glucose, maltose, mannose, tagatose, allulose, galactose, and ribose; sugar alcohol such as erythritol, mannitol, sorbitol, xylitol, isomalt, lactitol, maltitol; natural sweeteners such as stevioside, thaumatine, glycyrrhizin and artificial high intensity sweeteners such as acesulfame, alitame, aspartame, cylamate, neotame, saccharin, and sucralose; and artificial sweeteners such as aspartame, sucralose, acesulfame K, neotame, and saccharin.

In order to have a beverage with the desired viscosity, one or more suitable thickening agents are used. Suitable thickener agents include gellan gum, locust bean gum, guar gum, carboxymethylcellulose, microcrystalline cellulose, carrageenan, starch, xanthan gum, pectin, agar-agar, gum Arabic, gelatin, chitosan, and other thickener agents conventionally used in beverages. Of course, in case of a vegan chocolate beverage, gelatin is not a suitable thickening agent.

As belongs to the common general knowledge of the skilled person, the appropriate amount of thickening agents will depend on the type(s) of thickening agent(s) used. However, the one or more thickening agents are used in a total amount of at least 0.03 wt%, more preferably, at least 0.2 wt%, and most preferably at least 0.4 wt%, based on the total weight of the chocolate beverage. The total amount of thickening agents forms no more than 2 wt%, more preferably no more than 1.8 wt%, even more preferably no more than 1.5 wt%, and most preferably at most 1 wt% of the chocolate beverage, based on the total weight of the chocolate beverage. In one embodiment, the one or more thickening agents are selected from the group consisting of gellan gum, locust bean gum, guar gum, carboxymethylcellulose, microcrystalline cellulose, carrageenan, starch, and xanthan gum. In yet another embodiment, the one or more thickening agents are selected from the group consisting of gellan gum, locust bean gum, starch, and microcrystalline cellulose.

In one embodiment, the chocolate beverage according to the present invention also comprises one or more additives selected from the group consisting of flavouring agents, salts, and emulsifiers. It may be favourable to add flavouring agents such as vanilla flavour, caramel flavour, chocolate flavor, cream flavor, masking flavours, or flavours with modifying properties such as Steviarome, to the beverage. In case an emulsifier is used, it is preferably an emulsifier selected from the group consisting of mono- and diglycerides of fatty acids and lecithin. Suitable salts that may be added in small quantities include calcium carbonate, calcium phosphate, calcium citrate, calcium sulphate, calcium bicarbonate, magnesium citrate, magnesium phosphates, magnesium carbonate, magnesium sulphate, magnesium bicarbonate, sodium chloride, and potassium chloride. Particularly preferred salts are potassium chloride, sodium chloride, calcium carbonate and calcium phosphate. Typically, if used, these additives are present in a total amount of 0.03 wt%, more preferably of at least 0.5 wt% and most preferably at least 0.7 wt%, based on the total weight of the chocolate beverage, and typically in an amount of no more than 2 wt%, more preferably at most 1.8 wt% and most preferably at most 1.6 wt%, based on the total weight of the chocolate beverage.

It was found by the inventors that it is also needed to use one or more acidity regulators in the chocolate beverage according to the present invention. The one or more acidity regulators are selected from the group of citrates, phosphates, carbonates, sulphates, and bicarbonates of sodium and potassium. Or to put it differently, it is possible to use a sodium salt of citrate, a potassium salt of citrate, a sodium salt of phosphate, a potassium salt of phosphate, a sodium salt of carbonate, a potassium salt of carbonate, a sodium salt of sulphate, a potassium salt of sulphate, a sodium salt of bicarbonate, a potassium salt of bicarbonate, or any mixture thereof. It was surprisingly found that the use of the acidity regulators according to the invention improved the taste experience. More particularly, the taste of the chocolate beverage becomes surprisingly more creamy and less watery.

The acidity regulators are present in a total amount of 0.01 wt%, more preferably of at least 0.1 wt% and most preferably at least 0.5 wt%, based on the total weight of the chocolate beverage, and in an amount of no more than 1 wt%, more preferably at most 0.6 wt%, based on the total weight of the chocolate beverage. Most preferred acidity regulators are trisodium citrate and potassium hydrogen phosphate (K₂HPO₄).

In one embodiment, the chocolate beverage has a viscosity in the range of 30 mPa.s and 80 mPa.s, preferably in the range of 40 mPa.s and 60 mPa.s as measured by a Brookfield viscometer at 60 rpm at 20°C. Preferably, it has a viscosity which is comparable to state of the art chocolate drinks which are based on dairy.

The chocolate beverage according to the present invention has a water content of at least 70 wt%, more preferably of at least 75 wt%, and most preferably of at least 77 wt%. However, the chocolate beverage does not have a water content higher than 95 wt%, preferably not higher than 90 wt%, more preferably not higher than 87 wt% and most preferably, not higher than 85 wt%, based on the total weight of the chocolate beverage.

More particularly, water is present in such an amount that all components in the chocolate beverage, including water, together form 100% by weight of said chocolate beverage.

The chocolate beverage according to the present invention is preferably an ambient shelf-stable, ready to drink product.

In a further aspect, the invention relates to a process for preparing a chocolate beverage comprising plant proteins, wherein said process comprises the following steps
a) blending the following components to form a mixture:
   (i) a source of proteins derived from cashew nuts and optionally one or more sources of other plant proteins in amounts such that the mixture comprises at least 0.25 wt% of protein from cashew nuts and the total amount of plant protein in the mixture lies between 0.25 wt% and 6 wt%;
   (ii) between 0 and 2 wt% of one or more additives selected from the group consisting of flavouring agents, salts, and emulsifiers;
   (iii) between 0.01 and 1 wt% of one or more acidity regulators selected from the group of citrates, phosphates, carbonates, sulphates, and bicarbonates of sodium, and potassium;
   (iv) between 0.03 and 2 wt% of one or more thickening agents;
   (v) vegetable fat in such an amount that the total amount of vegetable fat lies between 0.3 and 5 wt%;
   (vi) between 0.2 and 2 wt% of cocoa powder;
   (vii) between 0.05 and 14 wt% of one or more sweeteners; and
   (viii) between 75 and 95 wt% of water, with weight percentages being based on the total weight of the mixture prepared in step (a); b) if necessary, adjusting the pH to a pH of 6.9 - 7.4, and subsequently carrying out step
(c) which either comprises the steps of
(c-i) subjecting the resulting mixture to a heat treatment by heating it to a temperature of between 65 and 85°C, preferably between 68 and 80°C,
(c-ii) subsequently subjecting the mixture to homogenization step, and
(c-iii) heating the homogenized mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes; or which comprises the steps of
(c-iv) subjecting the mixture to a heat treatment by heating the mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes;
(c-v) cooling to a temperature of between 65 and 85°C, preferably between 68 and 80°C, and
(c-vi) subjecting the mixture to a homogenization step,
d) subjecting the heat-treated and homogenized product to a cooling step, resulting in the chocolate beverage comprising plant proteins.

It was found that by performing said process, a chocolate beverage comprising plant proteins could be obtained with the desired shelf-stability and the desired ambient sterility, wherein there is little or no creaming of fat, little or no sedimentation of proteins or cocoa particles, and/or a smooth mouthfeel (little or no sandiness).

If the cashew nuts protein is used in combination with one or more other types of plant proteins, said plant proteins are preferably selected from the group consisting of chickpea protein, pea protein, edible bean protein, almond protein, soy protein, oat protein, rice protein, lupine protein, lentil protein, macademia protein, pecan nut protein, brazilian nut protein, hazelnut protein, walnut protein, and potato protein. In that case, besides a source of proteins derived from cashew nuts, component (i) thus further comprises one or more sources of plant proteins selected from the group consisting of chickpea protein, pea protein, edible bean protein, almond protein, soy protein, oat protein, rice protein, lupine protein, lentil protein, macademia protein, pecan nut protein, brazilian nut protein, hazelnut protein, walnut protein, and potato protein. Preferably, besides a source of proteins derived from cashew nuts, component (i) thus further comprises one or more sources of plant proteins selected from the group consisting of chickpea protein, pea protein, and edible bean protein.

"Source of plant protein" is meant to denote the component that is used as the ingredient in the chocolate beverage of the present invention, said ingredient being rich in plant protein, i.e. typically comprising at least 50 wt%, more preferably at least 70 wt%, most preferably at least 85 wt% of the respective plant protein.

Blending step (a) can be carried out using conventional techniques. As the skilled person will understand, components (i), (ii), (iii), (iv), (v), (vi), and (vii) do not have to be blended with water in a specific order. As non-limiting example, all dry components can be mixed first, after which the resulting mixture is blended with water, subsequently followed by mixing in of the vegetable fat component. It is also possible to blend the protein source(s) with water first, and subsequently blending in all the other components.

The one or more thickeners and one or more sweeteners are preferably as specified above in detail for the product according to the present invention. Furthermore, the flavouring agents, salts, emulsifiers, and vegetable fats are also preferably as specified above in detail for the product according to the invention.

As specified in detail above, the vegetable fat according to the present invention can be a mixture of different types of vegetable fat. It was also explained that part of, or even all of the vegetable fat present in the chocolate beverage may originate from the used source or sources of plant protein, such as cashew nuts kernels, cashew nuts paste, and/or other plant protein sources of the invention and that some of the vegetable fat present in the chocolate beverage may originate from the cocoa powder. The skilled person will thus understand that if, with the addition of further components, the desired amount of vegetable fat in the chocolate beverage is already reached, the amount of vegetable fat added in step (a) of the process of the invention can be zero. The total amount of vegetable fat in the mixture as prepared in step (a) of the process of the invention lies between 0.3 and 5 wt%. In another preferred embodiment, the vegetable fat comprises cocoa butter.

As also described above, it is particularly beneficial to use one or more specific acidity regulators selected from the group of citrates, phosphates, carbonates, sulphates, and bicarbonates of sodium and potassium as the use of these acidity regulators significantly improve the taste experience. The acidity regulators are used in an amount of 0.01 wt%, more preferably of at least 0.1 wt% and most preferably at least 0.5 wt%, based on the total weight of the chocolate beverage, and in an amount of no more than 1 wt%, more preferably at most 0.6 wt% and most preferably at most 0.4 wt%, based on the total weight of the chocolate beverage.

In one embodiment, the water with which the ingredients of the chocolate beverage are blended in step (a) has a temperature of between 30 and 65°C, preferably between 40 and 60°C and most preferably between 45 and 55°C. This is particularly beneficial to ensure smooth blending of the vegetable fat component such as cocoa butter.

Blending in step (a) of the ingredients with water is preferably achieved using a high speed mixer. High speed mixers conventionally used in the art are suitable for use in the process according to the present invention. Suitable examples include an AllMixer or an Ultra Turrax, and for industrial scale application for example Tetra Almix, a Liquiverter mixer, or a Tri blender mixer.

If the pH of the mixture as prepared in step (a) of the process according to the present invention is lower than 6.9, the pH is adjusted so that it falls within the range of 6.9 to 7.4, more preferably within the range of 7.0 to 7.4, and most preferably between 7.0 and 7.2. The skilled person will understand that it is also possible to adjust the pH to, e.g. 7.2, when the mixture as prepared in step (a) already has a pH of, e.g. 7.0. The pH adjustment can be done using conventionally used buffers, but typically, it is achieved using calcium hydroxide or potassium hydroxide or for example an acidity regulator according to the invention.

In one embodiment, the thus obtained mixture is subsequently subjected to a heat-treatment by heating said mixture to a temperature of between 65 and 85°C, preferably between 68 and 80°C, in order to melt the vegetable fat component (i.e. step c-i). Preferably, a holding time is used of between 2 seconds and 3 hours, more preferably between 3 seconds and 30 minutes. It is most preferred to keep the temperature elevated for only a few seconds (between 3 and 30 seconds). Step (c-i) can be carried out in conventional ways known in the art for heat-treatment of similar products.

The thus heat-treated mixture is subjected to a homogenization step so that a smoother mixture is obtained (due to refining and distributing fat globules present in the mixture and due to the fact that protein particles or aggregates are better dispersed). Homogenization step (c-ii) can be performed in conventional ways known in the art for the homogenization of dairy products. This means that, typically, the homogenization step (c-ii) is carried out at a pressure of at least 150 bar and at most 350 bar. In one embodiment, this homogenization step is carried out as a two-step homogenization, the first stage preferably at a pressure of between 150 and 300 bar, more preferably of between 180 and 220 bar, and the subsequent stage preferably at a pressure of between 20 and 50 bar. Preferably, step (c-ii) is carried out at a temperature of between 65 and 85°C, more preferably between 68 and 80°C.

In a next step (step c-iii), the heat-treated and homogenized mixture is subjected to another heat-treatment wherein the mixture is heated to a temperature between 125 and 145°C, preferably between 125 and 130°C, with a holding time of between 4 seconds and 6 minutes, preferably between 3 minutes and 5 minutes. This step is performed so that the product will have a shelf-life at ambient temperature of preferably at least 4 weeks, more preferably at least 10 weeks. As the skilled person knows, the holding time is typically shorter as the temperature is higher. Step (c-iii) can be performed in conventional ways known in the art. Heat-treatment via indirect processing is, however, preferred.

In a next step (step d), the heat-treated mixture is cooled, resulting in a plant-based chocolate beverage which is preferably a long-life beverage, which is stable at ambient temperature.

In one embodiment of the present invention, which is especially advantageous if the process is carried out on larger scale, preferably industrial scale, between step (c-ii) and step (c-iii), the heat-treated and homogenized mixture as prepared in step c-ii is subjected to a cooling step (x), wherein said mixture is cooled to a temperature below 10°C, and preferably below 8°C. The cooled mixture is in that case subsequently subjected to a second heat treatment (step y) by heating the mixture to a temperature of between 65°C and 80°C, preferably between 68°C and 75°C; and, next, subjecting the thus heat treated mixture from step (f) to another homogenization step (step (z).

The second homogenization step (step z) is preferably also a two-step homogenization. It is typically carried out at an initial pressure of between 150 and 300 bar, preferably between 180 and 220 bar, and a subsequent pressure of between 20 and 50 bar.

In another embodiment, although less preferred as compared to the embodiment described above, the mixture obtained in step (b) is subsequently subjected to a heat treatment by heating the mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes (step c-iv). This heat-treatment (step (c-iv) can also be performed in conventional ways known in the art. However, the heat-treatment is preferably carried out via direct heating (i.e. injection of steam).

The thus heat-treated mixture is subjected to a cooling step (c-v) wherein the mixture is cooled to a temperature of between 65 and 85°C, preferably between 68 and 80°C. Subsequently, the mixture is subjected to a homogenization step so that a smoother mixture is obtained. Also in this case, the homogenization step (c-vi) can be performed in conventional ways known in the art for the homogenization of dairy products. This means that typically the homogenization step (c-vi) is also carried out at a pressure of at least 150 bar and at most 350 bar. This homogenization step can also be carried out as a two-step homogenization, the first stage preferably at a pressure of between 150 and 300 bar, more preferably of between 180 and 220 bar, and the subsequent stage preferably at a pressure of between 20 and 50 bar.

In the next step (step d), the heat-treated mixture is cooled, resulting in the plant-based chocolate beverage of the invention.

In another embodiment, the prepared chocolate beverage comprising plant proteins according to the invention is packaged via aseptic filling of a package, which is preferably a cup, can, a carton, a glass bottle, or a plastic bottle.

In another embodiment, the prepared chocolate beverage comprising plant proteins according to the invention is packaged in a septic manner and subsequently sterilized using conventional techniques. In that embodiment, after step (d) whatever is applicable, preferably the following steps are performed:
- packaging of the cooled chocolate beverage via septic filling of a package, preferably a can, a glass bottle, or a plastic cup or bottle,
- performing a heat treatment of the packaged chocolate beverage via retort or autoclave, preferably for 10 to 15 minutes at between 123 and 117°C, and
- subjecting the heat-treated packaged chocolate beverage to a cooling step, wherein the packaged chocolate beverage is cooled to a temperature below 35°C.
The present invention is further exemplified by the following, non-limiting Examples:

### Example 1

A plant based drink with the ingredients as specified in Table 1 was prepared as follows:
A premix was made in a closable recipient of the dry ingredients specified below. 2.71 g of defatted cashew protein powder (ex Olam) was mixed with 0.67 g of pea protein Peazazz (ex Merit), 5 g of sugar, 1.5 g of fructose crystallin, 0.045 g of the stabilizer Kelcogel HMB (ex CP-Kelco) and 0.18 g of Avicel RC 591 (ex FMC Biopolymer AS), 1.7 g cocoa powder 20-22%, 0.13 g Calcium carbonate, 0.014 g of the Steviarome (ex Almendra), 0.1 g salt NaCl and 0.126 g and 0.3 g of the acid regulators trisodium citrate and dipotassium hydrogen phosphate, respectively. These dry ingredients were mixed well to get an homogeneous dry mix. Next, 85 g of warm water (50°C) was added under high agitation using a high speed mixer. Subsequently, 0.917 g of cocoa butter pellets was added, while mixing under high agitation. Finally, 0.04 g liquid vanilla flavor (ex Givaudan), was added while remain mixing under agitation and more water was added until in total 100 g of water was used. The resulting blend was mixed under high agitation until the cocoa butter had melted. The pH was adjusted with KOH to 7.2.

The thus obtained beverage was heated to 70°C and subjected to a homogenization step. The homogenization was carried out as a two-step homogenization at 70°C and 200 bar + 50 bar. The resulting homogenized mixture was subsequently subjected to sterilization at 130 °C for 3 minutes. The resulting sterilized and homogenized mixture was cooled to 20°C and placed in an aseptic manner in an aseptic glass bottle.

### Example 2

A plant based drink was made in the same manner as described for example 1, now with a single source plant protein, viz. defatted cashew protein powder (4.429g ex Olam), and with 0.574g of cocoa butter pellets. The exact composition of the drink of Example 2 is indicated in Table 1.

### Comparative Example 3

A plant based drink was made in the same manner as described for example 1, now with a single source plant protein, viz. 1.7816 Plantaris Faba isolate 90 A (ex FrieslandCampina), and with 1.371g of cocoa butter pellets. The exact composition of the drink of Comparative Example 3 is indicated in Table 1.

### Comparative Example 4

A plant based drink was made in the same manner as described for as example 1: but with a single source plant protein, viz. 1.7222 g of pea protein Peazazz (ex Merit), and with 1.454g of cocoa butter pellets. The exact composition of the drink of Comparative Example 4 is indicated in Table 1.

### Comparative Example 5

A plant based drink was as described in example 1 but now without addition of the acid regulators citrate and phosphate. The exact composition of the drink of Comparative Example 5 is indicated in Table 1.

### Evaluation by sensory testing:

Test samples of Examples 1, 2, 3, 4, and 5, were evaluated by a 3 trained experts (trained in evaluation of dairy chocolate drinks) via blind testing and via comparison with a dairy chocolate drink (viz. Chocomel ex FrieslandCampina). Further, these samples have been tested via broader trained sensory panel (min N=12) in comparison with the target dairy chocolate drink.
The sample of Example 1 was rated the best. It was found that the combination of cashew nuts protein with a second plant protein has significantly less specific plant off taste as compared with samples of examples 2, 3 and 4.

The sample of Example 2 was rated acceptable as well, although the viscosity was perceived as a little higher than the typical viscosity of commercially available chocolate drinks.

Comparative Examples 3 and 4 were rated as watery and with undesired plant off-taste. Although in other aspects rated acceptable, the sample of example 5 was deemed to have a too watery taste.

| **Table 1** | Example 1 | Example 2 | Comp. Example 3 | Comp. Example 4 | Comp. Ex. 5 |
|---|---|---|---|---|---|
| **Description** | **kg/100kg** | **kg/100kg** | **kg/100kg** | **kg/100kg** | **kg/100kg** |
| | | | | | |
| Pea protein | 0,6667 | | | 1,7222 | 0,6667 |
| Defatted Cashew protein powder | 2,714 | 4,429 | | | 2,714 |
| Faba bean protein | | | 1,7816 | | |
| WATER | 86,5673 | 85,862 | 87,7124 | 87,6888 | 86,9933 |
| Cocoa butter | 0,917 | 0,574 | 1,371 | 1,454 | 0,917 |
| Kelcogel HMB-(N) | 0,045 | 0,045 | 0,045 | 0,045 | 0,045 |
| AVICEL RC 591 | 0,18 | 0,18 | 0,18 | 0,18 | 0,18 |
| Calcium Carbonate | 0,13 | 0,13 | 0,13 | 0,13 | 0,13 |
| Tri sodium Citrate (C₆H₅Na₃O₇ . H₂O) | 0,126 | 0,126 | 0,126 | 0,126 | - |
| Di potassium phosphate (K₂HPO₄) | 0,3 | 0,3 | 0,3 | 0,3 | - |
| Salt (NaCl) | 0,1 | 0,1 | 0,1 | 0,1 | 0,1 |
| SUGAR (Beet / Cane) | 5 | 5 | 5 | 5 | 5 |
| Fructose crystalline | 1,5 | 1,5 | 1,5 | 1,5 | 1,5 |
| Cocoa powder (20-22%) | 1,7 | 1,7 | 1,7 | 1,7 | 1,7 |
| Vanilla flavour Givaudan | 0,04 | 0,04 | 0,04 | 0,04 | 0,04 |
| Steviarome 2050 | 0,014 | 0,014 | 0,014 | 0,014 | 0,014 |

## Claims

1. A process for preparing a chocolate beverage comprising plant proteins, wherein said process comprises the following steps
a) blending the following components to form a mixture:
(i) a source of proteins derived from cashew nuts and optionally one or more sources of other plant proteins in amounts such that the mixture comprises at least 0.25 wt% of protein from cashew nuts and the total amount of plant protein in the mixture lies between 0.25 wt% and 6 wt%;
(ii) between 0 and 2 wt% of one or more additives selected from the group consisting of flavouring agents, salts, and emulsifiers;
(iii) between 0.01 and 1 wt% of one or more acidity regulators selected from the group of citrates, phosphates, carbonates, sulphates, and bicarbonates of sodium, and potassium;
(iv) between 0.03 and 2 wt% of one or more thickening agents;
(v) vegetable fat in such an amount that the total amount of vegetable fat lies between 0.3 and 5 wt%;
(vi) between 0.2 and 2 wt% of cocoa powder;
(vii) between 0.05 and 14 wt% of one or more sweeteners; and
(viii) between 75 and 95 wt% of water,
with weight percentages being based on the total weight of the mixture prepared in step (a);
b) if necessary, adjusting the pH to a pH of 6.9 - 7.4,
and subsequently carrying out step (c) which either comprises the steps of
(c-i) subjecting the resulting mixture to a heat treatment by heating it to a temperature of between 65 and 85°C, preferably between 68 and 80°C,
(c-ii) subsequently subjecting the mixture to homogenization step, and
(c-iii) heating the homogenized mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes;
or which comprises the steps of
(c-iv) subjecting the mixture to a heat treatment by heating the mixture to a temperature between 125 and 145°C, preferably between 125 and 130°C, with a holding time of between 2 seconds and 7 minutes, preferably between 3 seconds and 6.5 minutes, more preferably between 4 seconds and 6 minutes, and most preferably between 3 minutes and 5 minutes;
(c-v) cooling to a temperature of between 65 and 85°C, preferably between 68 and 80°C, and
(c-vi) subjecting the mixture to a homogenization step,
d) subjecting the heat-treated and homogenized product to a cooling step, resulting in the chocolate beverage comprising plant proteins.

2. The process according to claim 1, wherein the vegetable fat comprises cocoa butter.

3. The process according to claim 1 or 2, wherein the one or more sources of other plant proteins are sources comprising plant protein selected from the group consisting of chickpea protein, pea protein, edible bean protein, almond protein, soy protein, oat protein, rice protein, lupine protein, lentil protein, macademia protein, pecan nut protein, brazilian nut protein, hazelnut protein, walnut protein, and potato protein; and preferably sources comprising plant protein(s) selected from the group consisting of chickpea protein, pea protein, and edible bean protein.

4. The process according to any one of the preceding claims, wherein the homogenization step (c-ii) or (c-vii) is performed at a pressure of at least 150 bar, and is preferably carried out as a two-step homogenization, with a first stage preferably carried out at a pressure of between 150 and 300 bar, more preferably between 180 and 220 bar, and with a subsequent stage preferably carried out at a pressure of between 20 and 50 bar.

5. The process according to any one of the preceding claims, wherein between step (c-ii) and step (c-iii) the following steps are carried out:
- (x) subjecting the heat-treated and homogenized mixture of step (d) to a cooling step, wherein said mixture is cooled to a temperature below 10°C, and preferably below 8°C;
- (y) subjecting the cooled mixture to a second heat treatment by heating the mixture to a temperature of between 65°C and 80°C, preferably between 68°C and 75°C; and
- (z) subjecting the thus heat treated mixture to another homogenization step.

6. The process according to claim 5, wherein the second homogenization step (step z) is a two-step homogenization, with a first stage preferably carried out at a pressure of between 150 and 300 bar, more preferably between 180 and 220 bar, and the second stage preferably at a pressure of 20 and 50 bar.

7. The process according to any one of the preceding claims wherein the prepared chocolate beverage comprising plant proteins is either packaged via aseptic filling of a package, preferably being a can, a carton, a glass bottle or a plastic bottle; or packaged via septic filling of a package, preferably being a can, glass bottle, or plastic bottle, and subsequently heat-treated.

8. The process according to any one of the preceding claims wherein the water that is used in step (a) has a temperature of between 40 and 60°C, preferably between 45 and 55°C.

9. The process according to any one of the preceding claims wherein one or more sweeteners are selected from the group consisting of sweet taste improving carbohydrates such as sucrose, fructose, glucose, maltose, mannose, tagatose, allulose, galactose, and ribose; sugar alcohol such as erythritol, mannitol, sorbitol, xylitol, isomalt, lactitol, maltitol; natural sweeteners such as stevioside, thaumatine, glycyrrhizin and artificial high intensity sweeteners such as acesulfame, alitame, aspartame, cylamate, neotame, saccharin, and sucralose; and artificial sweeteners such as aspartame, sucralose, acesulfame K, neotame, and saccharin; and/or the one or more thickening agents are selected from the group consisting of gellan gum, locust bean gum, guar gum, carboxymethylcellulose, microcrystalline cellulose, carrageenan, starch, xanthan gum, pectin, agar-agar, gum Arabic, gelatin, and chitosan.

10. A chocolate beverage comprising
i. a total amount of plant-based protein of between 0.25 - 6 wt%, with at least 0.25 wt%, and preferably at least 0.5 wt%, being protein from cashew nuts;
ii. a total amount of vegetable fat of between 0.3 - 5 wt%;
iii. cocoa powder, preferably in an amount of 0.2 - 2 wt%;
iv. 0.05 - 14 wt%, preferably 0.1 - 8 wt%, of the one or more sweeteners;
v. 0.03 - 2 wt% of the one or more thickening agents;
vi. 0 - 2 wt% of the one or more additives selected from the group consisting of flavouring agents, salts, and emulsifiers;
vii. 0.01 - 1 wt% of the acidity regulators selected from the group of citrates, phosphates, carbonates, sulphates, and bicarbonates of sodium, and potassium; and
viii. 75 - 95 wt% of water,
wherein the amounts are all based on the total weight of the chocolate beverage.

11. Chocolate beverage according to claim 10, wherein the other types of plant-based proteins are selected from the group consisting of chickpea protein, pea protein, edible bean protein, almond protein, soy protein, oat protein, rice protein, lupine protein, lentil protein, macademia protein, pecan nut protein, brazilian nut protein, hazelnut protein, walnut protein, and potato protein; and are, preferably, selected from the group consisting of chickpea protein, pea protein, and edible bean protein.

12. Chocolate beverage according to claim 10 or 11, wherein the one or more sweeteners are selected from the group consisting of sweet taste improving carbohydrates such as sucrose, fructose, glucose, maltose, mannose, tagatose, allulose, galactose, and ribose; sugar alcohol such as erythritol, mannitol, sorbitol, xylitol, isomalt, lactitol, maltitol; natural sweeteners such as stevioside, thaumatine, glycyrrhizin and artificial high intensity sweeteners such as acesulfame, alitame, aspartame, cylamate, neotame, saccharin, and sucralose; and artificial sweeteners such as aspartame, sucralose, acesulfame K, neotame, and saccharin; and/or wherein the one or more thickening agents is selected from the group consisting of gellan gum, locust bean gum, guar gum, carboxymethylcellulose, microcrystalline cellulose, carrageenan, starch, xanthan gum, pectin, agar-agar, gum Arabic, gelatin, and chitosan.

13. Chocolate beverage according to any one of claims 10-12, wherein the viscosity of the product lies in the range of 30 mPa.s and 80 mPa.s, as measured by a Brookfield viscometer at 60 rpm at 20°C.

## Patentansprüche

1. Verfahren zur Herstellung eines Schokoladengetränks, das Pflanzenproteine umfasst, wobei das Verfahren die folgenden Schritte umfasst
a) Mischen der folgenden Komponenten, um ein Gemisch zu bilden:
(i) eine Quelle von Proteinen, die von Cashewnüssen abgeleitet sind, und gegebenenfalls eine oder mehrere Quellen anderer Pflanzenproteine in solchen Mengen, dass das Gemisch wenigstens 0,25 Gew.-% Protein aus Cashewnüssen umfasst und die Gesamtmenge an Pflanzenprotein in dem Gemisch zwischen 0,25 Gew.-% und 6 Gew.-% beträgt;
(ii) zwischen 0 und 2 Gew.-% an einem oder mehreren Zusatzstoffen ausgewählt aus der Gruppe bestehend aus Aromastoffen, Salzen und Emulgatoren;
(iii) zwischen 0,01 und 1 Gew.-% an einem oder mehreren Säureregulatoren ausgewählt aus der Gruppe von Citraten, Phosphaten, Carbonaten, Sulfaten und Bicarbonaten von Natrium und Kalium;
(iv) zwischen 0,03 und 2 Gew.-% an einem oder mehreren Verdickungsmitteln;
(v) Pflanzenfett in einer solchen Menge, dass die Gesamtmenge an Pflanzenfett zwischen 0,3 und 5 Gew.-% beträgt;
(vi) zwischen 0,2 und 2 Gew.-% Kakaopulver;
(vii) zwischen 0,05 und 14 Gew.-% an einem oder mehreren Süßstoffen; und
(viii) zwischen 75 und 95 Gew.-% Wasser,
wobei Gewichtsprozentwerte auf das Gesamtgewicht des bei Schritt (a) hergestellten Gemischs bezogen sind;
b) nötigenfalls Einstellen des pH-Werts auf einen pH-Wert von 6,9 - 7,4,
und anschließend Durchführen von Schritt (c), entweder umfassend die Schritte
(c-i) Unterwerfen des erhaltenen Gemischs an eine Wärmebehandlung durch Erhitzen auf eine Temperatur von zwischen 65 und 85 °C, vorzugsweise zwischen 68 und 80 °C,
(c-ii) anschließend Unterwerfen des Gemischs an einen Homogenisierungsschritt und
(c-iii) Erhitzen des homogenisierten Gemischs auf eine Temperatur zwischen 125 und 145 °C, vorzugsweise zwischen 125 und 130 °C, mit einer Haltezeit zwischen 2 Sekunden und 7 Minuten, vorzugsweise zwischen 3 Sekunden und 6,5 Minuten, bevorzugter zwischen 4 Sekunden und 6 Minuten und höchst bevorzugt zwischen 3 Minuten und 5 Minuten; oder umfassend die Schritte
(c-iv) Unterwerfen des Gemischs an eine Wärmebehandlung durch Erhitzen des Gemischs auf eine Temperatur zwischen 125 und 145 °C, vorzugsweise zwischen 125 und 130 °C, mit einer Haltezeit zwischen 2 Sekunden und 7 Minuten, vorzugsweise zwischen 3 Sekunden und 6,5 Minuten, bevorzugter zwischen 4 Sekunden und 6 Minuten und höchst bevorzugt zwischen 3 Minuten und 5 Minuten;
(c-v) Abkühlen auf eine Temperatur von zwischen 65 und 85 °C, vorzugsweise zwischen 68 und 80 °C, und
(c-vi) Unterwerfen des Gemischs an einen Homogenisierungsschritt,
d) Unterwerfen des wärmebehandelten und homogenisierten Produkts an einen Kühlschritt, um das Schokoladengetränk, das Pflanzenproteine umfasst, zu ergeben.

2. Verfahren nach Anspruch 1, wobei das Pflanzenfett Kakaobutter umfasst.

3. Verfahren nach Anspruch 1 oder 2, wobei die eine oder mehreren Quellen anderer Pflanzenproteine Quellen umfassend Pflanzenprotein ausgewählt aus der Gruppe bestehend aus Kichererbsenprotein, Erbsenprotein, Speisebohnenprotein, Mandelprotein, Sojaprotein, Haferprotein, Reisprotein, Lupinenprotein, Linsenprotein, Macademiaprotein, Pecannussprotein, Paranussprotein, Haselnussprotein, Walnussprotein und Kartoffelprotein sind; vorzugsweise Quellen umfassend Pflanzenprotein(e) ausgewählt aus der Gruppe bestehend aus Kichererbsenprotein, Erbsenprotein und Speisebohnenprotein.

4. Verfahren nach einem der vorstehenden Ansprüche, wobei der Homogenisierungsschritt (c-ii) oder (c-vii) bei einem Druck von wenigstens 150 bar durchgeführt wird und vorzugsweise als zweistufige Homogenisierung durchgeführt wird, wobei eine erste Stufe vorzugsweise bei einem Druck von zwischen 150 und 300 bar, bevorzugter zwischen 180 und 220 bar, durchgeführt wird und eine nachfolgende Stufe vorzugsweise bei einem Druck von zwischen 20 und 50 bar durchgeführt wird.

5. Verfahren nach einem der vorstehenden Ansprüche, wobei zwischen Schritt (c-ii) und Schritt (c-iii) die folgenden Schritte durchgeführt werden:
- (x) Unterwerfen des wärmebehandelten und homogenisierten Gemischs aus Schritt (d) an einen Kühlschritt, wobei das Gemisch auf eine Temperatur unter 10 °C und vorzugsweise unter 8 °C gekühlt wird;
- (y) Unterwerfen des gekühlten Gemischs an eine zweite Wärmebehandlung durch Erhitzen des Gemischs auf eine Temperatur von zwischen 65 °C und 80 °C, vorzugsweise zwischen 68 °C und 75 °C; und
- (z) Unterwerfen des so wärmebehandelten Gemischs an einen weiteren Homogenisierungsschritt.

6. Verfahren nach Anspruch 5, wobei der zweite Homogenisierungsschritt (Schritt z) eine zweistufige Homogenisierung ist, wobei eine erste Stufe vorzugsweise bei einem Druck von zwischen 150 und 300 bar, bevorzugter zwischen 180 und 220 bar, und die zweite Stufe vorzugsweise bei einem Druck von 20 und 50 bar durchgeführt wird.

7. Verfahren nach einem der vorstehenden Ansprüche, wobei das hergestellte Schokoladengetränk, das Pflanzenproteine umfasst, entweder durch aseptisches Füllen einer Verpackung, die vorzugsweise eine Dose, ein Karton, eine Glasflasche oder eine Kunststoffflasche ist, verpackt wird; oder durch septisches Füllen einer Verpackung, die vorzugsweise eine Dose, eine Glasflasche oder einer Kunststoffflasche ist, verpackt und anschließend wärmebehandelt wird.

8. Verfahren nach einem der vorstehenden Ansprüche, wobei das Wasser, das bei Schritt (a) verwendet wird, eine Temperatur von zwischen 40 und 60 °C, vorzugsweise zwischen 45 und 55 °C, aufweist.

9. Verfahren nach einem der vorstehenden Ansprüche, wobei ein oder mehrere Süßstoffe ausgewählt sind aus der Gruppe bestehend aus Süßgeschmack verbessernden Kohlenhydraten, wie z.B. Saccharose, Fructose, Glucose, Maltose, Mannose, Tagatose, Allulose, Galactose und Ribose; Zuckeralkohol, wie z.B. Erythrit, Mannit, Sorbit, Xylit, Isomalt, Lactit, Maltit; natürlichen Süßstoffen, wie z.B. Steviosid, Thaumatin, Glycyrrhizin, und künstlichen Süßstoffen mit hoher Intensität, wie z.B. Acesulfam, Alitam, Aspartam, Cylamat, Neotam, Saccharin und Sucralose; und künstlichen Süßstoffen, wie z.B. Aspartam, Sucralose, Acesulfam K, Neotam und Saccharin; und/oder das eine oder die mehreren Verdickungsmittel ausgewählt sind aus der Gruppe bestehend aus Gellangummi, Johannisbrotgummi, Guargummi, Carboxymethylcellulose, mikrokristalliner Cellulose, Carrageen, Stärke, Xanthangummi, Pektin, Agar-Agar, Gummi arabicum, Gelatine und Chitosan.

10. Schokoladengetränk umfassend
i. eine Gesamtmenge an Protein auf Pflanzenbasis zwischen 0,25 und 6 Gew.-%, wobei wenigstens 0,25 Gew.-% und vorzugsweise wenigstens 0,5 Gew.-% Protein aus Cashewnüssen sind;
ii. eine Gesamtmenge an Pflanzenfett von zwischen 0,3 und 5 Gew.-%;
iii. Kakaopulver, vorzugsweise in einer Menge von 0,2 - 2 Gew.-%;
iv. 0,05 - 14 Gew.-%, vorzugsweise 0,1 - 8 Gew.-%, an dem einen oder den mehreren Süßstoffen;
v. 0,03 - 2 Gew.-% an dem einen oder den mehreren Verdickungsmitteln;
vi. 0 - 2 Gew.-% an dem einen oder den mehreren Zusatzstoffen ausgewählt aus der Gruppe bestehend aus Aromastoffen, Salzen und Emulgatoren;
vii. 0,01 - 1 Gew.-% an den Säureregulatoren ausgewählt aus der Gruppe von Citraten, Phosphaten, Carbonaten, Sulfaten und Bicarbonaten von Natrium und Kalium; und
viii. 75 - 95 Gew.-% Wasser,
wobei die Mengen alle auf das Gesamtgewicht des Schokoladengetränks bezogen sind.

11. Schokoladengetränk nach Anspruch 10, wobei die anderen Typen von Proteinen auf Pflanzenbasis ausgewählt sind aus der Gruppe bestehend aus Kichererbsenprotein, Erbsenprotein, Speisebohnenprotein, Mandelprotein, Sojaprotein, Haferprotein, Reisprotein, Lupinenprotein, Linsenprotein, Macademiaprotein, Pecannussprotein, Paranussprotein, Haselnussprotein, Walnussprotein und Kartoffelprotein; und vorzugsweise ausgewählt sind aus der Gruppe bestehend aus Kichererbsenprotein, Erbsenprotein und Speisebohnenprotein.

12. Schokoladengetränk nach Anspruch 10 oder 11, wobei das eine oder die mehreren Süßstoffe ausgewählt sind aus der Gruppe bestehend aus Süßgeschmack verbessernden Kohlenhydraten, wie z.B. Saccharose, Fructose, Glucose, Maltose, Mannose, Tagatose, Allulose, Galactose und Ribose; Zuckeralkohol, wie z.B. Erythrit, Mannit, Sorbit, Xylit, Isomalt, Lactit, Maltit; natürlichen Süßstoffen, wie z.B. Steviosid, Thaumatin, Glycyrrhizin, und künstlichen Süßstoffen mit hoher Intensität, wie z.B. Acesulfam, Alitam, Aspartam, Cylamat, Neotam, Saccharin und Sucralose; und künstlichen Süßstoffen, wie z.B. Aspartam, Sucralose, Acesulfam K, Neotam und Saccharin; und/oder das eine oder die mehreren Verdickungsmittel ausgewählt sind aus der Gruppe bestehend aus Gellangummi, Johannisbrotgummi, Guargummi, Carboxymethylcellulose, mikrokristalliner Cellulose, Carrageen, Stärke, Xanthangummi, Pektin, Agar-Agar, Gummi arabicum, Gelatine und Chitosan.

13. Schokoladengetränk nach einem der Ansprüche 10-12, wobei die Viskosität des Produkts in dem Bereich von 30 MPa.s und 80 MPa.s liegt, gemessen mit einem Brookfield-Viskosimeter bei 60 U/min bei 20 °C.

## Revendications

1. Procédé pour la préparation d'une boisson chocolatée comprenant des protéines végétales, ledit procédé comprenant les étapes suivantes
a) la combinaison des composants suivants pour former un mélange :
(i) une source de protéines dérivées de noix de cajou et éventuellement une ou plusieurs sources d'autres protéines végétales en quantités telles que le mélange comprend au moins 0,25 % en poids de protéines issues de noix de cajou et que la quantité totale de protéines végétales dans le mélange se situe entre 0,25 % en poids et 6 % en poids ;
(ii) entre 0 et 2 % en poids d'un ou plusieurs additifs choisis dans le groupe constitué par les agents aromatisants, les sels et les émulsifiants ;
(iii) entre 0,01 et 1 % en poids d'un ou plusieurs correcteurs d'acidité choisis dans le groupe des citrates, phosphates, carbonates, sulfates et bicarbonates de sodium et de potassium ;
(iv) entre 0,03 et 2 % en poids d'un ou plusieurs agents épaississants ;
(v) de la matière grasse végétale en une quantité telle que la quantité totale de matière grasse végétale se situe entre 0,3 et 5 % en poids ;
(vi) entre 0,2 et 2 % en poids de poudre de cacao ;
(vii) entre 0,05 et 14 % en poids d'un ou plusieurs édulcorants ; et
(viii) entre 75 et 95 % en poids d'eau,
les pourcentages en poids étant basés sur le poids total du mélange préparé à l'étape (a) ;
b) si nécessaire, l'ajustement du pH à un pH de 6,9-7,4,
et par la suite la mise en œuvre de l'étape (c) qui comprend soit les étapes consistant à
(c-i) soumettre le mélange résultant à un traitement thermique par chauffage de celui-ci à une température comprise entre 65 et 85 °C, de préférence entre 68 et 80 °C,
(c-ii) par la suite soumettre le mélange à une étape d'homogénéisation et
(c-iii) chauffer le mélange homogénéisé à une température comprise entre 125 et 145 °C, de préférence entre 125 et 130 °C, avec un temps de maintien à température compris entre 2 secondes et 7 minutes, de préférence entre 3 secondes et 6,5 minutes, plus préférablement entre 4 secondes et 6 minutes et le plus préférablement entre 3 minutes et 5 minutes ;
soit les étapes consistant à
(c-iv) soumettre le mélange à un traitement thermique par chauffage du mélange à une température comprise entre 125 et 145 °C, de préférence entre 125 et 130 °C, avec un temps de maintien à température compris entre 2 secondes et 7 minutes, de préférence entre 3 secondes et 6,5 minutes, plus préférablement entre 4 secondes et 6 minutes et le plus préférablement entre 3 minutes et 5 minutes ;
(c-v) refroidir à une température comprise entre 65 et 85 °C, de préférence entre 68 et 80 °C, et
(c-vi) soumettre le mélange à une étape d'homogénéisation,
d) le fait de soumettre le produit traité thermiquement et homogénéisé à une étape de refroidissement, résultant en la boisson chocolatée comprenant des protéines végétales.

2. Procédé selon la revendication 1, dans lequel la matière grasse végétale comprend du beurre de cacao.

3. Procédé selon la revendication 1 ou 2, dans lequel la ou les sources d'autres protéines végétales sont des sources comprenant des protéines végétales choisies dans le groupe constitué par les protéines de pois chiche, les protéines de pois, les protéines de haricots comestibles, les protéines d'amande, les protéines de soja, les protéines d'avoine, les protéines de riz, les protéines de lupin, les protéines de lentille, les protéines de noix de macadamia, les protéines de noix de pécan, les protéines de noix du Brésil, les protéines de noisette, les protéines de noix et les protéines de pomme de terre ; et de préférence des sources comprenant des protéines végétales choisies dans le groupe constitué par les protéines de pois chiche, les protéines de pois et les protéines de haricots comestibles.

4. Procédé selon l'une quelconque des revendications précédentes, dans lequel l'étape d'homogénéisation (c-ii) ou (c-vii) est effectuée à une pression d'au moins 150 bar et est de préférence mise en œuvre sous forme d'une homogénéisation en deux étapes, avec une première phase de préférence mise en œuvre à une pression comprise entre 150 et 300 bar, plus préférablement entre 180 et 220 bar, et avec une phase subséquente de préférence mise en œuvre à une pression comprise entre 20 et 50 bar.

5. Procédé selon l'une quelconque des revendications précédentes, dans lequel entre l'étape (c-ii) et l'étape (c-iii) les étapes suivantes sont mises en œuvre :
- (x) le fait de soumettre le mélange traité thermiquement et homogénéisé de l'étape (d) à une étape de refroidissement, ledit mélange étant refroidi à une température au-dessous de 10 °C et de préférence au-dessous de 8 °C ;
- (y) le fait de soumettre le mélange refroidi à un second traitement thermique par chauffage du mélange à une température comprise entre 65 °C et 80 °C, de préférence entre 68 °C et 75 °C ; et
- (z) le fait de soumettre le mélange ainsi traité thermiquement à une autre étape d'homogénéisation.

6. Procédé selon la revendication 5, dans lequel la seconde étape d'homogénéisation (étape z) est une homogénéisation en deux étapes, avec une première phase de préférence mise en œuvre à une pression comprise entre 150 et 300 bar, plus préférablement entre 180 et 220 bar, et la seconde phase de préférence à une pression de 20 et 50 bar.

7. Procédé selon l'une quelconque des revendications précédentes dans lequel la boisson chocolatée comprenant des protéines végétales préparée est soit conditionnée par le biais d'un remplissage aseptique d'un conditionnement, de préférence qui est une canette, une brique, une bouteille en verre ou une bouteille en plastique ; soit conditionnée par le biais d'un remplissage septique d'un conditionnement, de préférence qui est une canette, une bouteille en verre ou une bouteille en plastique, et par la suite traitée thermiquement.

8. Procédé selon l'une quelconque des revendications précédentes dans lequel l'eau qui est utilisée à l'étape (a) a une température comprise entre 40 et 60 °C, de préférence entre 45 et 55 °C.

9. Procédé selon l'une quelconque des revendications précédentes dans lequel le ou les édulcorants sont choisis dans le groupe constitué par les glucides améliorant le goût sucré tels que le saccharose, le fructose, le glucose, le maltose, le mannose, le tagatose, l'allulose, le galactose et le ribose ; un alcool de sucre tel que l'érythritol, le mannitol, le sorbitol, le xylitol, l'isomalt, le lactitol, le maltitol ; les édulcorants naturels tels que le stévioside, la thaumatine, la glycyrrhizine et les édulcorants intenses de synthèse tels que l'acésulfame, l'alitame, l'aspartame, le cyclamate, le néotame, la saccharine et le sucralose ; et les édulcorants de synthèse tels que l'aspartame, le sucralose, l'acésulfame K, le néotame et la saccharine ; et/ou le ou les agents épaississants sont choisis dans le groupe constitué par la gomme gellane, la gomme de caroube, la gomme de guar, la carboxyméthylcellulose, la cellulose microcristalline, le carraghénane, l'amidon, la gomme xanthane, la pectine, l'agar-agar, la gomme arabique, la gélatine et le chitosane.

10. Boisson chocolatée comprenant
i. une quantité totale de protéines d'origine végétale comprise entre 0,25 et 6 % en poids, au moins 0,25 % en poids et de préférence au moins 0,5 % en poids étant des protéines issues de noix de cajou ;
ii. une quantité totale de matière grasse végétale comprise entre 0,3 et 5 % en poids ;
iii. de la poudre de cacao, de préférence en une quantité de 0,2-2 % en poids ;
iv. 0,05-14 % en poids, de préférence 0,1-8 % en poids du ou des édulcorants ;
v. 0,03-2 % en poids du ou des agents épaississants ;
vi. 0-2 % en poids du ou des additifs choisis dans le groupe constitué par les agents aromatisants, les sels et les émulsifiants ;
vii. 0,01-1 % en poids des correcteurs d'acidité choisis dans le groupe des citrates, phosphates, carbonates, sulfates et bicarbonates de sodium et de potassium ; et
viii. 75-95 % en poids d'eau,
les quantités étant toutes basées sur le poids total de la boisson chocolatée.

11. Boisson chocolatée selon la revendication 10, dans laquelle les autres types de protéines d'origine végétale sont choisis dans le groupe constitué par les protéines de pois chiche, les protéines de pois, les protéines de haricots comestibles, les protéines d'amande, les protéines de soja, les protéines d'avoine, les protéines de riz, les protéines de lupin, les protéines de lentille, les protéines de noix de macadamia, les protéines de noix de pécan, les protéines de noix du Brésil, les protéines de noisette, les protéines de noix et les protéines de pomme de terre ; et sont, de préférence, choisis dans le groupe constitué par les protéines de pois chiche, les protéines de pois et les protéines de haricots comestibles.

12. Boisson chocolatée selon la revendications 10 ou 11, dans laquelle le ou les édulcorants sont choisis dans le groupe constitué par les glucides améliorant le goût sucré tels que le saccharose, le fructose, le glucose, le maltose, le mannose, le tagatose, l'allulose, le galactose et le ribose ; un alcool de sucre tel que l'érythritol, le mannitol, le sorbitol, le xylitol, l'isomalt, le lactitol, le maltitol ; les édulcorants naturels tels que le stévioside, la thaumatine, la glycyrrhizine et les édulcorants intenses de synthèse tels que l'acésulfame, l'alitame, l'aspartame, le cyclamate, le néotame, la saccharine et le sucralose ; et les édulcorants de synthèse tels que l'aspartame, le sucralose, l'acésulfame K, le néotame et la saccharine ; et/ou dans laquelle le ou les agents épaississants sont choisis dans le groupe constitué par la gomme gellane, la gomme de caroube, la gomme de guar, la carboxyméthylcellulose, la cellulose microcristalline, le carraghénane, l'amidon, la gomme xanthane, la pectine, l'agar-agar, la gomme arabique, la gélatine et le chitosane.

13. Boisson chocolatée selon l'une quelconque des revendications 10-12, la viscosité du produit, telle que mesurée par un viscosimètre Brookfield à 60 tr/m à 20 °C, se situant dans la plage de 30 mPa.s et 80 mPa.s.
